## Europäisches Patentamt
## European Patent Office
## Office européen des brevets

(11) Publication number: **0 065 508**
A1

# (12) EUROPEAN PATENT APPLICATION

(21) Application number: **82850110.6**

(51) Int. Cl.³: **E 02 B 15/04**

(22) Date of filing: **13.05.82**

(30) Priority: **15.05.81 SE 8103053**

(71) Applicant: **Santrade Limited, P.O. Box 321, CH-6002 Luzern (CH)**

(43) Date of publication of application: **24.11.82**
**Bulletin 82/47**

(72) Inventor: **Gunnar, Fast Sven, Norra Järngatan 14 A, S-811 30 Sandviken (SE)**

(84) Designated Contracting States: **DE FR GB IT NL SE**

(74) Representative: **Taquist, Lennart et al, Sandvik AB Patents & Licences Fack, S-811 81 Sandviken 1 (SE)**

(54) **Barrier for oil and other impurities.**

(57) Barrier adapted to float on a water surface for limiting the spread of floating impurities as oil or similar said barrier consisting of a row of interconnected plates adapted to float in a vertical position. According to the invention the plates (11) are placed with overlapping end portions and are interconnected by means (12) which permit relative rotation of the plates in the vertical plane.

Barrier for oil and other impurities

The present invention relates to a barrier or boom for oil and other impurities on a water surface, which barrier can be placed at outflows from industries, power plants and similar in order to prevent oil, foam, fibres, bark and similar from spreading. Also at water intakes where the said impurities are not desirable the barrier can be used.

It is earlier known to put out barriers in for instance harbours for screening off an oil containing area from a pure area. Such barriers are made of a plastic or rubber material and are formed in such a way that they float on the water surface and follow the movement of the waves. The known barriers are, however, affected with the following drawbacks:

1) In the winter time the barriers are often damaged by ice-floes or by freezing fast in the ice.
2) Oil and other substances adhere in course of time to the barrier so that the barrier is bent and put out of order.
3) When the barrier needs cleaning this can as a rule not be done on the spot but the barrier must be brought ashore.
4) In case of fire the barrier is destroyed and put out of function.
5) It is difficult to arrange abutments which give an efficient tightening between the shore and the barrier.
6) In case of damange a major part of the barrier must be replaced.

It is the purpose of the present invention to solve these problems, and a preferred embodiment of the invention will be closer described in connection with the appended drawing showing:

Fig. 1, a barrier and abutment therefore in an elevational view.

Fig. 2, a top view of the barrier and the abutment.

Fig. 3, a top view on a larger scale of the barrier and the fastening means.

Fig. 4, a horizontal section of a joint between two plates in the barrier.

Fig. 5, the same joint as in Fig. 4 subjected to bending.

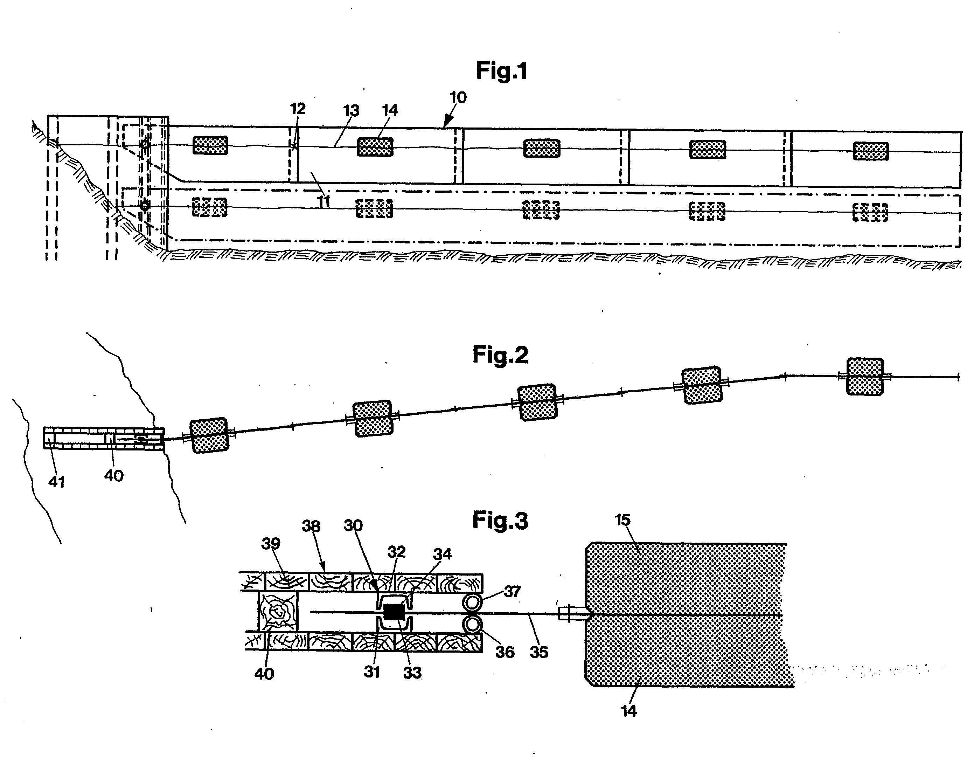

Fig. 1 shows a barrier 10 made of a metallic material, preferably a cold rolled steel sheet. The barrier consists of a number of preferably rectangular plates 11 which are interconnected with joints 12 which permit the plates 11 to rotate in relation to each other on a horizontal axis perpendicular to the sheet.

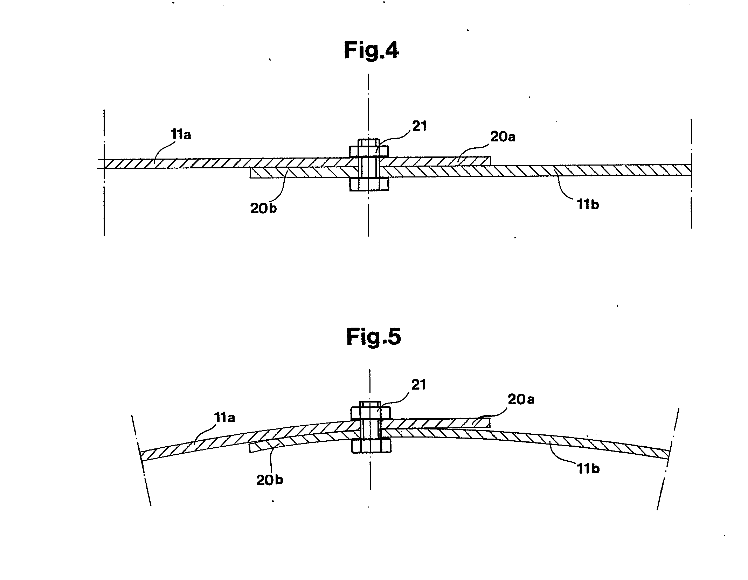

The joint 12 is shown more closely in Figs. 4 and 5. The joined plates 11 a and 11 b overlap each other by portions 20 a and 20 b and are fastened together with a bolt 21. The bolt 21 permits the plates to rotate on the bolt as axis, the overlapping portions 20 remaining in contact with each other during the rotation and thus no oil or other debris passing through the joint. Fig. 5 shows the joint when the barrier is subjected to bending. On the outside of the bend the overlapping portion 20 a is raised from the contact with the plate 11 b, while the overlapping portion 20 b is urged into closer contact with the plate 11 a thus improving the tightening.

The interconnected plates 11 are adapted to be placed in the water so that at least 50 % of the height of the plate is placed under the water surface, whereby the device is rendered stable. It has been found convenient to have the plates 11 with about 2/3 of their height under the water and 1/3 above the water. The rotation centre 12 for the plate 11 should lie on the upper half of the height of the plate and preferably level with the water surface 13.

By placing the rotation centre 12 level with the water surface 13 and letting the plates overlap the advantage is obtained that even if the rotation of two adjacent plates relative to each other is considerable, there will not arise
any opening between them in the vicinity of the water surface through which oil could pass through, which would be
the case if the joint 12 were remote from the water surface
13.

In order to keep the metal plates 11 in the desired position
in the water each plate is provided with at least one, preferably two floats 14, 15, one float being placed on each
side of the plate 11. The float 14, 15 which preferably is
an airtight horizontal cylinder of steel sheet is attached
to the metal plate 11 in a suitable way for instance by welding or with screws. The position of the floats 14, 15 on the
plate is dependent on how great portion of the height of the
plate shall be above the water surface. In the described
embodiment about 1/3 of the height of the plates shall be
above the water surface, which means that the middle of the
floats shall be on about the same level as the water surface.

Several fields of application can be considered for the described barrier. Thus it is possible to surround a ship
leaking oil in a harbour. Another possibility is that it is
desired to prevent an oil discharge, which may be permanent
at the shore of a lake, from spreading further over the lake.
In this case there must be an abutment device for each end of
the barrier, which device is arranged at the shore of the lake.
The embodiment here illustrated is an example of the last mentioned field of use. Thus is shown in the drawing how one end
of the barrier 10 is fastened in an abument device 30 which
is founded at the shore of for instance a lake.

The  abutment device 30 comprises at least two U-shaped
girders 31, 32 which can be founded by sinking into the
water and into the bottom of the lake adjacent the edge of
the water.

4

The girders are placed adjacent each other so that the U:s in the girders have their openings facing each other. One end of the barrier 10 is supposed to be entered between the vertical girders 31, 32 so that the barrier 10 will be free to move up or down as the water level changes. In Fig. 1 the position of the barrier 10 at a low water level has been indicated by dash and dot lines.

In order to prevent the end of the barrier 10 from being pulled out from the abutment device 30 there is at least one, suitably two members 33, 34 attached to the sheet 35 which forms one end of the barrier 10. These members which suitably are two rollers, one on each side of the sheet 35, are shaped for gliding in the space between the girders 31, 32 without risk that the sheet 35 shall slip out from the abutment device 30. The sheet 35 is also free to rotate in the vertical plane between the girders 31, 32 with the members 33, 34 as rotation centre.

When the barrier moves sideways there may be risk that the sheet 35 at the end of the barrier can be subjected to breaking forces. In order to counteract this the fastening device is provided with two stationary sliding rolls 36, 37 between which the sheet 35 is situated. These sliding rolls can be two vertical round bars and are situated outside the girders 31, 32. These round bars 36, 37 may in the same way as the U-girders 31, 32 be founded and anchored in the bottom of the lake.

The abutment device 30 also comprises a base 38 which in our embodiment consists of vertical wood beams 39 which enter down into the water and are situated alongside on each side of the girders 31, 32 and the rods 36, 37. The base is held together by two main girders 40, 41 which are anchored at the edge of the water. This base forms by its extension between the shore and the first plate 35 in the barrier 10 complementory barrier preventing water mixed with oil to pass through between the main barrier 10 and the edge of the water.

It can be noted that the girders 31, 32 and rods 36, 37 instead of being anchored in the bottom of the lake could be anchored in the base 38 in which the wood beams could be replaced by steel girders. Furthermore could be noted that a similar abutment device as the one marked 30 is arranged at the other end of the barrier 10 in case the barrier 10 is supposed to prevent oil from coming out for instance from a water edge.

As earlier mentioned the barrier 10 consists of plates 11 which are adapted to be rotated in relation to each other. The plates 11 consist preferably of a rectangular, relatively thin and flexible steel sheet which preferably is between 2 and 2.5 meters long and between 0.6 to 1.5 meters high. The centre of rotation between the plates is the same as the connection point between them. The connection between the plates is made in a suitable way for instance by a bolt as illustrated in Figs. 4 and 5 or a coupling device. The position of the rotation centre means that even if the metal sheets are subjected to a considerable angular movement an efficient tightening is obtained between the sheets. As the sheet can be subjected to bending their quality must be so high that a permanent bending does not arise.

The present invention has a number of advantages:

1) The barrier 10 is insensitive to fire as it is made of a metallic material. This is very important when it is desired to prevent spreading of oil around an oil ship which has caught fire.

2) The barrier 10 is substantially free from maintenance and requires little attendance. Thus it is not necessary to bring it in for winter storage, as it is not in the least damaged in case it should be frozen in.

3) The separate plates 11 are rotatable in relation to each other which means that they in rough weather can move in relation to each other and follow the movement of the waves. Thus the function of the device is preserved also in case of high waves on the water.

4) If the barrier 10 should be damaged for instance run into by a boat, it is sufficient to replace only one or a few plates, which is both simple and cheap. As each sheet preferably is provided with two floats it forms a separate floating unit which, when it is placed in the water, immediately takes the correct position, and thus easily can be towed out to the damaged place.

5) The abutment device for both ends of the barrier 10 makes it possible for the barrier to freely follow the changes of the water level and thus to preserve its functional ability independently of the water level.

The invention is of course not limited to the described embodiment but can be modified within the scope of the following patent claims.

Claims

1.  Barrier adapted to float on a water surface for limiting
the spread of floating impurities as oil or similar, said
barrier consisting of a row of interconnected plates, adapted
to float in a vertical position, c h a r a c t e r i z e d
in that the plates (11) are placed with overlapping end
portions and are interconnected by means (12) which permit
relative rotation of the plates in the vertical plane.


2.  Barrier as defined in claim 1, c h a r a c t e r i z e d
in that the plates are in the main rectangular.

3.  Barrier as defined in claim 1 or 2, c h a r a c t e r i z -
e d  in that each plate consists of a steel sheet.

4.  Barrier as defined in claims 2 or 3, c h a r a c t e r i z -
e d  in that the plates are made of cold rolled steel sheet
and have the shape of a rectangle with a length of 2 - 2.5 m
and a height of 0.6 - 1.5 m.

5.  Barrier as defined in any of the preceding claims, c h a -
r a c t e r i z e d  in that the plates (11) have more than
their half part, preferably 2/3, below the water surface.

6.  Barrier as defined in any of the preceding claims, c h a -
r a c t e r i z e d  in that the centre of rotation (12)
between adjacent plates is placed adjacent the water surface.

7.  Barrier as defined in any of the preceding claims, c h a -
r a c t e r i z e d  in that each plate (11) is provided with
at least one, preferably two floats (14, 15), one on each side
of the plate (11).

8.  Barrier as defined in claim 4, c h a r a c t e r i z e d
in that the floats (14, 15) consist of an air-tight, horizontal
cylinder, preferably of steel plate and are attached to the
plate (11) preferably by welding.

9. Barrier as defined in any of the preceding claims, c h a -
r a c t e r i z e d   in that it comprises an abutment device
(30) which has two substantially vertical slits (31, 32) with
openings facing each other, the end plate (35) of the barrier
having two lateral projections (33, 34) entering into said
slits, said projections being movable along said slits and
also permitting rotation of the plate (35) in the vertical
plane.

10. Barrier as defined in any of the preceding claims, c h a -
r a c t e r i z e d   in that the means (12) for inter -
connecting the plates (11) are bolts (21) placed perpendi-
cularly to the plates.

**Fig.1**

**Fig.2**

**Fig.3**

## Fig.4

## Fig.5

European Patent Office

# EUROPEAN SEARCH REPORT

Application number

EP 82 85 0110

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 685 296 (T.O.BOGOSIAN)<br><br>*Column 5, line 8 - line 25; figures 1,2* | 1,2,5,7 | E 02 B 15/04 |
| Y | DE-A-2 922 657 (H.JEBSEN)<br>*Page 9, paragraph 2; page 19, paragraph 6 - page 20, paragraph 2; figures 1,2* | 1,6 | |
| A | FR-A-2 129 631 (CABINE REGIMBEAU)<br>*Page 4, line 4 - line 15; figure 1* & US - A - 3 786 637 | 1,7,8 | |
| A | FR-A-2 207 506 (R.CHEVALLIER)<br>*Page 3, line 4 - line 21; figures 1,2* | 1,10 | |
| A | US-A-3 766 738 (G.J.GAUCH)<br>*Abstract; figure 1* | 1,9 | **TECHNICAL FIELDS SEARCHED (Int. Cl. ³)**<br><br>E 02 B |
| P,A | US-A-4 300 856 (R.E.MAGOON)<br><br>*Column 4, line 42 - column 5, line 29; figure 3* | 1,2,3,7 | |

The present search report has been drawn up for all claims

| Place of search | Date of completion of the search | Examiner |
|---|---|---|
| THE HAGUE | 05-08-1982 | CLASING M.F. |